# FASCICULE DE BREVET EUROPEEN

(11) **EP 2 072 327 B1**
(45) Date de publication et mention de la délivrance du brevet: **25.08.2010**
(21) Numéro de dépôt: 08291155.3
(22) Date de dépôt: 08.12.2008
(51) Int. Cl.: B60N 2/30, B60N 2/36, B60R 5/04

(54) **Dispositif de libération de l'espace de chargement des bagages d'un véhicule automobile**
Freigabeeinrichtung des Gepäckladeraums eines Kraftfahrzeugs
Release device of the luggage load space of a motor vehicle

(30) Priorité: 20.12.2007 FR 0708971
(43) Date de publication de la demande: 24.06.2009
(73) Titulaire: Centre d'étude et de recherche pour l'automobile (CERA), 51100 Reims (FR)
(72) Inventeur: Montagne, Frédéric, 51150 Tours sur Marne (FR)
(74) Mandataire: Sayettat, Julien Christian

(56) Documents cités:
- EP-A- 1 283 130
- EP-A- 1 484 221
- FR-A- 2 875 758

## Description

L'invention concerne un dispositif de libération de l'espace de chargement des bagages d'un véhicule automobile et un système de montage d'un cache bagages de véhicule automobile sur une ébénisterie latérale dudit espace de chargement.

Il est connu de réaliser un dispositif de libération de l'espace de chargement des bagages d'un véhicule automobile, ledit dispositif comprenant :
- un moyen de verrouillage réversible en configuration déployée d'un rideau de cache bagages rétractable,
- un moyen de verrouillage réversible en configuration relevée d'un dossier de siège arrière rabattable contre l'assise dudit siège,
- un organe d'actionnement du déverrouillage dudit moyen de verrouillage dudit dossier.

Dans un tel agencement, l'utilisateur souhaitant libérer complètement l'espace de chargement doit d'une part actionner l'organe d'actionnement du déverrouillage du moyen de verrouillage du dossier et d'autre part déverrouiller le moyen de verrouillage du rideau, c'est à dire réaliser deux manipulations, ce qui est peu ergonomique.

L'invention a pour but de pallier cet inconvénient.

A cet effet, et selon un premier aspect, l'invention propose un dispositif de libération de l'espace de chargement des bagages d'un véhicule automobile, ledit dispositif comprenant :
- un moyen de verrouillage réversible en configuration déployée d'un rideau de cache bagages rétractable,
- un moyen de verrouillage réversible en configuration relevée d'un dossier de siège arrière rabattable contre l'assise dudit siège,
- un organe d'actionnement du déverrouillage dudit moyen de verrouillage dudit dossier,
   ledit organe d'actionnement étant interconnecté avec ledit moyen de verrouillage dudit rideau de sorte que l'actionnement dudit organe d'actionnement permette le déverrouillage conjoint desdits moyens de verrouillage dudit dossier et dudit rideau.

Ainsi, une manipulation unique permet de libérer l'espace de chargement.

Dans cette description, les termes de positionnement dans l'espace (vertical, longitudinal, transversal, latéral, avant, arrière,...) sont pris en référence au dispositif disposé dans le véhicule.

Selon un deuxième aspect, l'invention propose un système de montage d'un cache bagages de véhicule automobile sur une ébénisterie latérale d'espace de chargement, ledit système comprenant un dispositif de libération de l'espace de chargement selon l'invention.

D'autres particularités et avantages de l'invention apparaîtront dans la description qui suit, faite en référence aux figures jointes dans lesquelles :

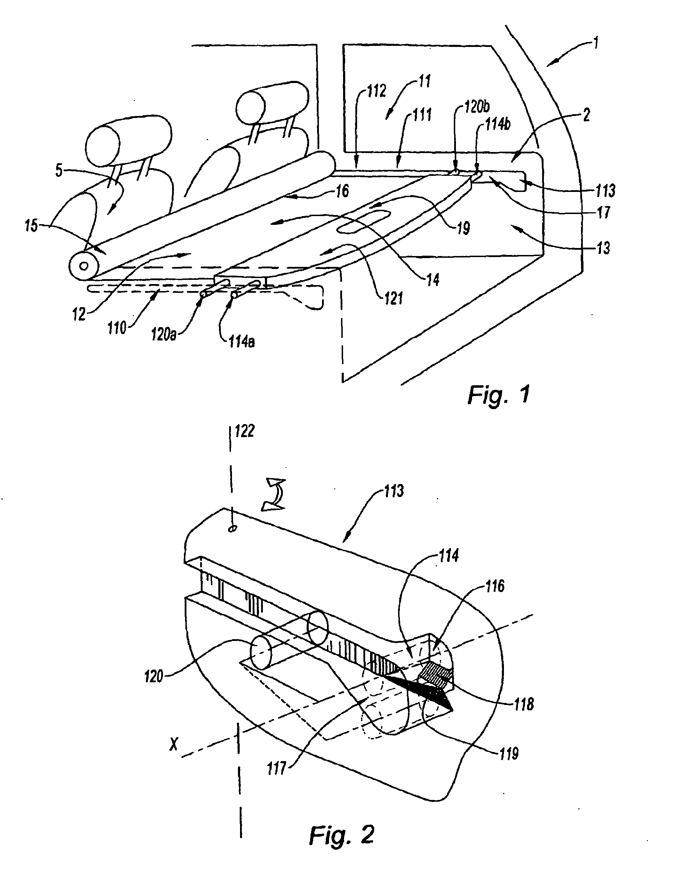

- la figure 1 est une représentation en perspective d'un système de montage d'un cache bagages de véhicule automobile sur une ébénisterie latérale d'espace de chargement, ledit système étant disposé dans son environnement, ledit système comprenant un dispositif selon l'invention,
- la figure 2 est une représentation en perspective partielle du système de la figure 1.

En référence aux figures, on décrit un dispositif 1 de libération de l'espace de chargement des bagages d'un véhicule automobile, ledit dispositif comprenant :
- un moyen de verrouillage 2 réversible en configuration déployée d'un rideau 14 de cache bagages 12 rétractable, sa rétraction étant obtenue ici par enroulement dudit rideau autour d'un axe associé à un moyen de rappel élastique en enroulement,
- un moyen de verrouillage réversible, non représenté, en configuration relevée d'un dossier 5 de siège arrière rabattable contre l'assise dudit siège,
- un organe d'actionnement, non représenté, du déverrouillage dudit moyen de verrouillage dudit dossier,
ledit organe d'actionnement étant interconnecté avec ledit moyen de verrouillage dudit rideau de sorte que l'actionnement dudit organe d'actionnement permette le déverrouillage conjoint desdits moyens de verrouillage dudit dossier et dudit rideau.

Selon une réalisation, l'organe d'actionnement est sous forme d'une poignée interconnectée respectivement par deux câbles au moyen de verrouillage du dossier 5 et au moyen de verrouillage 2 du rideau 14.

Selon une réalisation, la poignée est montée en rotation.

Selon une réalisation, la poignée est montée en translation.

Selon une réalisation, l'organe d'actionnement est interconnecté au moyen de verrouillage 2 du rideau 14 par intégration audit moyen de verrouillage du rideau, par exemple en étant sous forme d'une saillie issue de moulage ou d'une zone d'appui, ledit organe d'actionnement étant interconnecté avec le moyen de verrouillage de dossier 5, par exemple par un câble, de sorte qu'un actionnement manuel dudit organe d'actionnement entraîne un déverrouillage desdits moyens de verrouillage de dossier et de rideau.

On décrit à présent un système de montage 11 d'un cache bagages 12 de véhicule automobile sur une ébénisterie latérale 13 d'espace de chargement, ledit cache bagages comprenant:
- un rideau rétractable 14,
- un dispositif de rétraction 15 du rideau 14 qui est associé à un premier bord transversal 16 du rideau 14, de sorte que ledit rideau soit mobile entre une position rétractée de rangement et une position déployée d'utilisation,
ledit système comprenant :
- un rail 17, ici sous forme de tranchée - ou, en variante non représentée, sous forme d'un appui longiligne - prévu dans l'ébénisterie latérale 13 et disposé latéralement par rapport au rideau 14 en position déployée, ledit rail comprenant une partie avant 112 et une partie arrière 113,
- un organe de blocage 114a,114b, ici sous forme de doigt agencé pour pénétrer dans la tranchée, monté mobile en translation transversale en partie latérale du deuxième bord transversal 19 du rideau 14 et agencé pour coopérer en coulissement avec le rail 17, ledit organe de blocage étant appliqué de façon permanente, en position rétractée, par un moyen de contrainte élastique contre le rail 17 lors du mouvement du rideau 14,
la partie arrière 113 comprenant :
- un renfoncement transversal 116 situé sensiblement dans le prolongement longitudinal du rail 17, agencé de sorte à recevoir l'organe de blocage 114a,114b en position déployée et à permettre un blocage du rideau 14 en position déployée, ledit organe de blocage formant, en coopération avec ladite partie arrière, moyen de verrouillage 2,
- un rail annexe 117 débouchant sur le rail 17,
- une rampe 118 reliant le renfoncement 116 au rail annexe 117 de sorte à permettre, sous l'action d'une force extérieure exercée perpendiculairement à la direction de translation de l'organe de blocage 114a,114b, le passage dudit organe de blocage depuis le renfoncement 116 vers le rail annexe 117 et son libre coulissement vers le rail 17 pour un retour du rideau 14 en position rétractée,
ledit système comprenant en outre un dispositif 1, ladite partie arrière étant montée en rotation, selon un axe 122 sensiblement vertical, et étant interconnectée avec l'organe d'actionnement de sorte à pouvoir pivoter, lorsque ledit organe d'actionnement est actionné, et à permettre le dégagement dudit organe de blocage du renfoncement 116 et son libre coulissement vers le rail 17 pour un retour du rideau 14 en position rétractée.

Un tel système 11, non pourvu du dispositif 1, est décrit dans le document FR- 2 875 758.

Le rideau 14 est représenté en position intermédiaire entre sa position rétractée et sa position déployée.

Le système 11 représenté comprend deux organes de blocage 114a, 114b disposés de part et d'autre du rideau 14 selon une direction transversale.

Selon une réalisation, le système 11 comprend en outre un moyen de contrainte élastique, non représenté, permettant le retour de la partie arrière 113 en position non pivotée lorsque l'organe d'actionnement n'est pas actionné.

Selon la réalisation représentée, le dispositif de rétraction 15 du rideau 14, de nature souple, comprend un carter dans lequel est disposé un dispositif d'enroulement du rideau 14 en position rétractée.

Dans la réalisation représentée, le rail annexe 117 est situé sensiblement à l'aplomb vertical du renfoncement 116, de sorte à permettre le passage de l'organe de blocage 114a,114b depuis le renfoncement 116 vers le rail annexe 117 sous l'action d'une force verticale exercée par l'utilisateur, ce qui correspond à une cinématique de déblocage très simple.

Afin d'empêcher le retour non souhaité de l'organe de blocage 114a,114b depuis le rail annexe 117 vers le renfoncement 116 lors de la manoeuvre de déblocage du rideau 14 pour son retour en position rétractée, il est prévu un épaulement 119 disposé entre la rampe 118 et le rail annexe 117.

La rampe 118 est ici formée d'un plan incliné.

Deux organes de guidage 120a,120b sont associés en parties latérales 110,111 du rideau et à distance des organes de blocage 114a,114b, lesdits organes de guidage étant dimensionnés de sorte à être introduits et à pouvoir coulisser dans le rail 17 lors du mouvement du rideau 14.

Selon la réalisation représentée, le deuxième bord longitudinal 19 du rideau est associé à une bordure de rigidification 121, les organes de blocage 114a,114b et/ou de guidage 120a,120b étant associés à la bordure 121. La manoeuvre de déploiement, blocage et déblocage du rideau 14 est alors effectuée par actionnement de la bordure 121.

De façon non représentée, l'organe d'actionnement est intégré au moyen de verrouillage 2 du rideau 14, notamment sous la forme d'une zone d'appui prévue sur la partie arrière 113 pour permettre la rotation manuelle de ladite partie arrière, ledit organe d'actionnement étant interconnecté avec le moyen de verrouillage de dossier 5, par exemple par un câble, de sorte qu'un actionnement manuel dudit organe d'actionnement entraîne un déverrouillage desdits moyens de verrouillage de dossier et de rideau.

## Revendications

1. Dispositif (1) de libération de l'espace de chargement des bagages d'un véhicule automobile, ledit dispositif comprenant :
• un moyen de verrouillage (2) réversible en configuration déployée d'un rideau (14) de cache bagages rétractable,
• un moyen de verrouillage réversible en configuration relevée d'un dossier (5) de siège arrière rabattable contre l'assise dudit siège,
• un organe d'actionnement du déverrouillage dudit moyen de verrouillage dudit dossier,
ledit dispositif étant **caractérisé en ce que** ledit organe d'actionnement est interconnecté avec ledit moyen de verrouillage dudit rideau de sorte que l'actionnement dudit organe d'actionnement permette le déverrouillage conjoint desdits moyens de verrouillage dudit dossier et dudit rideau.

2. Dispositif selon la revendication 1, **caractérisé en ce que** l'organe d'actionnement est sous forme d'une poignée interconnectée respectivement par deux câbles au moyen de verrouillage du dossier (5) et au moyen de verrouillage (2) du rideau (14).

3. Dispositif selon la revendication 2, **caractérisé en ce que** la poignée est montée en rotation.

4. Dispositif selon la revendication 2, **caractérisé en ce que** la poignée est montée en translation.

5. Dispositif selon la revendication 1, **caractérisé en ce que** l'organe d'actionnement est interconnecté au moyen de verrouillage (2) du rideau (14) par intégration audit moyen de verrouillage du rideau, ledit organe d'actionnement étant interconnecté avec le moyen de verrouillage de dossier (5), de sorte qu'un actionnement manuel dudit organe d'actionnement entraîne un déverrouillage desdits moyens de verrouillage de dossier et de rideau.

6. Système de montage (11) d'un cache bagages (12) de véhicule automobile sur une ébénisterie latérale (13) d'espace de chargement, ledit cache bagages comprenant:
• un rideau rétractable (14),
• un dispositif de rétraction (15) du rideau (14) qui est associé à un premier bord transversal (16) du rideau (14), de sorte que ledit rideau soit mobile entre une position rétractée de rangement et une position déployée d'utilisation,
ledit système comprenant :
• un rail (17) prévu dans l'ébénisterie latérale (13) et disposé latéralement par rapport au rideau (14) en position déployée, ledit rail comprenant une partie avant (112) et une partie arrière (113),
• au moins un organe de blocage (114a,114b) monté mobile en translation transversale en partie latérale du deuxième bord transversal (19) du rideau (14) et agencé pour coopérer en coulissement avec le rail (17), ledit organe de blocage étant appliqué de façon permanente, en position rétractée, par un moyen de contrainte élastique contre le rail (17) lors du mouvement du rideau (14),
la partie arrière (113) comprenant :
• un renfoncement transversal (116) situé sensiblement dans le prolongement longitudinal du rail (17), agencé de sorte à recevoir l'organe de blocage (114a,114b) en position déployée et à permettre un blocage du rideau (14) en position déployée, ledit organe de blocage formant, en coopération avec ladite partie arrière, moyen de verrouillage (2),
• un rail annexe (117) débouchant sur le rail (17),
• une rampe (118) reliant le renfoncement (116) au rail annexe (117) de sorte à permettre, sous l'action d'une force extérieure exercée perpendiculairement à la direction de translation de l'organe de blocage (114a,114b), le passage dudit organe de blocage depuis le renfoncement (116) vers le rail annexe (117) et son libre coulissement vers le rail (17) pour un retour du rideau (14) en position rétractée,
ledit système étant **caractérisé en ce qu'**il comprend en outre un dispositif selon l'une quelconque des revendications 1 à 5, ladite partie arrière étant montée en rotation, selon un axe (122) sensiblement vertical, et étant interconnectée avec l'organe d'actionnement de sorte à pouvoir pivoter, lorsque ledit organe d'actionnement est actionné, et à permettre le dégagement dudit organe de blocage du renfoncement (116) et son libre coulissement vers le rail (17) pour un retour du rideau (14) en position rétractée.

7. Système selon la revendication 6, **caractérisé en ce qu'**il comprend en outre un moyen de contrainte élastique permettant le retour de la partie arrière (113) en position non pivotée lorsque l'organe d'actionnement n'est pas actionné.

## Claims

1. Device for (1) releasing the loading space of luggage of an automobile vehicle, said device comprising:
- a reversible means for locking (2) in deployed configuration of retractable curtain (14) of a concealed luggage area,
- a reversible means for locking in raised configuration of a seatback (5) of the rear seat that can be folded against the seat portion of said seat,
- a member for actuating the unlocking of said means for locking of said seatback,
said device being **characterised in that** said member for actuating is interconnected with said means for locking of said curtain in such a way that the actuating of said member for actuating allows for the joint unlocking of said means for locking of said seatback and of said curtain.

2. Device according to claim 1, **characterised in that** the member for actuating is in the form of a handle interconnected respectively by two cables to the means for locking of the seatback (5) and to the means for locking (2) of the curtain (14).

3. Device according to claim 2, **characterised in that** the handle is mounted in rotation.

4. Device according to claim 2, **characterised in that** the handle is mounted in translation.

5. Device according to claim 1, **characterised in that** the member for actuating is interconnected to the means for locking (2) of the curtain (14) by integration to said means for locking of the curtain, said member for actuating being interconnected with the means for locking of the seatback (5), in such a way that a manual actuating of said member for actuating causes an unlocking of said means of locking of the seatback and curtain.

6. System for mounting (11) of a concealed luggage area (12) of an automobile vehicle on a lateral cabinetwork (13) of a loading space, said concealed luggage area comprising:
- a retractable curtain (14),
- a device for retracting (15) the curtain (14) which is associated to a first transversal edge (16) of the curtain (14), in such a way that said curtain is mobile between a retracted storage position and a deployed position of use,
said system comprising:
- a rail (17) provided in the lateral cabinetwork (13) and arranged laterally in relation to the curtain (14) in deployed position, said rail comprising a front portion (112) and a rear portion (113),
- at least one member of blocking (114a, 114b) mounted mobile in transversal translation in the lateral portion of the second transversal edge (19) of the curtain (14) and arranged in order to cooperate by sliding with the rail (17), said member for blocking being applied in a permanent manner, in retracted position, by a means of elastic constraint against the rail (17) during the movement of the curtain (14),
the rear portion (113) comprising:
- a transversal recess (116) located substantially in the longitudinal extension of the rail (17), arranged in such a way as to receive the member of blocking (114a, 114b) in deployed position and to allow for a blocking of the curtain (14) in deployed position, said member for blocking forming, in cooperation with said rear portion, means for locking (2).
- an annex rail (117) exiting on the rail (17),
- a ramp (118) connecting the recess (116) to the annex rail (117) in such a way as to allow, under the action of an exterior force exerted perpendicularly to the direction of translation of the member for blocking (114a, 114b), the passage of said member of blocking from the recess (116) to the annex rail (117) and its free sliding towards the rail (17) for a return of the curtain (14) to retracted position,
said system being **characterised in that** it further comprises a device according to any of claims 1 to 5, said rear portion being mounted in rotation, according to a substantially vertical axis (122), and being interconnected with the member for actuating in such a way as to be able to pivot, when said member for actuating is actuated, and to make possible the releasing of said member for blocking of the recess (116) and its free sliding towards the rail (17) for a return of the curtain (14) to retracted position.

7. System according to claim 6, **characterised in that** it further comprises a means of elastic constraint allowing for the return of the rear portion (113) to non-pivoted position when the member for actuating is not actuated.

## Patentansprüche

1. Vorrichtung (1) zum Freimachen des Gepäckladeraums eines Kraftfahrzeugs, wobei die Vorrichtung Folgendes umfasst:
- ein Verriegelungsmittel (2), das in der ausgebreiteten Konfiguration eines einziehbaren Gepäckabdeckvorhangs (14) umkehrbar ist,
- ein Verriegelungsmittel, das in der angehobenen Konfiguration einer Rücksitzlehne (5), die auf die Sitzfläche des Sitzes umklappbar ist, umkehrbar ist,
- ein Organ zur Betätigung der Entriegelung des Verriegelungsmittels der Lehne,
wobei die Vorrichtung **dadurch gekennzeichnet ist, dass** das Betätigungsorgan mit dem Verriegelungsmittel des Vorgangs verbunden ist, so dass die Betätigung des Betätigungsorgans die gemeinsame Entriegelung der Verriegelungsmittel der Lehne und des Vorhangs ermöglicht.

2. Vorrichtung nach Anspruch 1, **dadurch gekennzeichnet, dass** das Betätigungsorgan in Form eines Griffs vorliegt, der jeweils über zwei Kabel mit dem Verriegelungsmittel der Lehne (5) und dem Verriegelungsmittel (2) des Vorhangs (14) verbunden ist.

3. Vorrichtung nach Anspruch 2, **dadurch gekennzeichnet, dass** der Griff drehbar angebracht ist.

4. Vorrichtung nach Anspruch 2, **dadurch gekennzeichnet, dass** der Griff translationsmäßig angebracht ist.

5. Vorrichtung nach Anspruch 1, **dadurch gekennzeichnet, dass** das Betätigungsorgan mit dem Verriegelungsmittel (2) des Vorhangs (14) durch Integration in das Verriegelungsmittel des Vorhangs verbunden ist, wobei das Betätigungsorgan mit dem Verriegelungsmittel der Lehne (5) verbunden ist, so dass eine manuelle Betätigung des Betätigungsorgans eine Entriegelung der Verriegelungsmittel der Lehne und des Vorhangs bewirkt.

6. Einbausystem (11) einer Gepäckabdeckung (12) eines Kraftfahrzeugs auf einer seitlichen Verkleidung (13) des Laderaums, wobei die Gepäckabdeckung Folgendes umfasst:
- einen einziehbaren Vorhang (14),
- eine Einziehvorrichtung (15) des Vorhangs (14), die mit einem ersten Querrand (16) des Vorhangs (14) verknüpft ist, so dass der Vorhang zwischen einer eingezogenen Stauposition und einer ausgebreiteten Gebrauchsposition bewegbar ist,
wobei das System Folgendes umfasst:
- eine Schiene (17), die in der Seitenverkleidung (13) bereitgestellt wird und im Verhältnis zum Vorhang (14) in der ausgebreiteten Position seitlich angeordnet ist, wobei die Schiene einen vorderen Teil (112) und einen hinteren Teil (113) umfasst,
- mindestens ein Blockierungsorgan (114a, 114b), das in teilweise seitlicher Quertranslation des zweiten Querrandes (19) des Vorhangs (14) bewegbar angebracht ist und angeordnet ist, um gleitend mit der Schiene (17) zusammenzuwirken, wobei das Blockierungsorgan in der eingezogenen Position dauerhaft von einem elastischen Belastungsmittel während der Bewegung des Vorhangs (14) an die Schiene (17) angelegt wird,
wobei der hintere Teil (113) Folgendes umfasst:
- eine Quervertiefung (116), die sich im Wesentlichen in der Längsverlängerung der Schiene (17) befindet, die derart angeordnet ist, dass sie das Blockierungsorgan (114a, 114b) in der ausgebreiteten Position aufnimmt, und eine Blockierung des Vorhangs (14) in der ausgebreiteten Position ermöglicht, wobei das Blockierungsorgan mit dem hinteren Teil zusammenwirkend ein Verriegelungsmittel (2) bildet,
- eine Zusatzschiene (117), die in die Schiene (17) mündet,
- eine Rampe (118), welche die Vertiefung (116) mit der Zusatzschiene (117) verbindet, um unter Einwirkung einer äußeren Kraft, die rechtwinklig zur Translationsrichtung des Blockierungsorgans (114a, 114b) ausgeübt wird, den Übergang des Blockierungsorgans von der Vertiefung (116) in die Zusatzschiene (117) und sein freies Gleiten auf die Schiene (17) zu für eine Rückkehr des Vorhangs (14) in die eingezogene Position zu ermöglichen,
wobei das System **dadurch gekennzeichnet ist, dass** es ferner eine Vorrichtung nach einem der Ansprüche 1 bis 5 umfasst, wobei der hintere Teil drehbar angeordnet ist, entlang einer Achse (122), die im Wesentlichen senkrecht ist, und mit dem Betätigungsorgan verbunden ist, um verschwenken zu können, wenn das Betätigungsorgan betätigt wird, und um die Freigabe des Blockierungsorgans der Vertiefung (116) und ihr freies Gleiten auf die Schiene (117) zu für eine Rückkehr des Vorhangs (14) in die eingezogene Position zu ermöglichen.

7. System nach Anspruch 6, **dadurch gekennzeichnet, dass** es ferner ein Mittel zur elastischen Belastung umfasst, das die Rückkehr des hinteren Teils (113) in die nicht verschwenkte Position ermöglicht, wenn das Betätigungsorgan nicht betätigt wird.
